# EUROPÄISCHE PATENTANMELDUNG

(11) **EP 0 836 044 A1**
(43) Veröffentlichungstag der Anmeldung: **15.04.1998**
(21) Anmeldenummer: 97114188.2
(22) Anmeldetag: 18.08.1997
(51) Int. Cl.: F16L 47/00

(54) **Zweikomponenten-Anbindungselement**

(30) Priorität: 10.10.1996 DE 19641751
(71) Anmelder: HÜLS AKTIENGESELLSCHAFT, 45764 Marl (DE)
(72) Erfinder: Ries, Hans, Dr., 45772 Marl (DE); Lorenz, Frank, 59399 Olfen (DE); Schmitz, Guido, Dr., 46282 Dorsten (DE)

(57) **Zusammenfassung**

Ein Anbindungselement zur Verbindung eines Aggregates mit einer Rohrleitung, das eine hohe Dichtigkeit gegenüber dem zu fördernden Medium sowie eine Sicherung gegen Trennen durch axiale Belastung besitzt, besteht aus zwei unterschiedlich stark quellenden Werkstoffen A und B, wobei das Teil aus dem stärker quellenden Werkstoff A an der Verbindungsstelle mit dem Werkstoff B eine umlaufende Dichtungslippe aufweist, die mit dem geringer quellenden Werkstoff B vollständig umhüllt so daß ein Formschluß erreicht wird.

## Beschreibung

Gegenstand der vorliegenden Erfindung ist ein rohrartiges Element für die Anbindung von Rohren an andere Aggregate, beispielsweise für die Anbindung von Kraftstoffleitungen an andere Komponenten des kraftstofführenden Systems wie z. B. den Tank.

Im Rahmen der immer strengeren Anforderungen an die Reduzierung von Kohlenwasserstoffemissionen aus Kraftfahrzeugen erweisen sich in zunehmendem Maße die Anbindungselemente als Problemstellen.

Insbesondere die Anbindung von Leitungen an einen Kunststoffkraftstofftank erweist sich als problematisch, da hierbei wegen der Unverträglichkeit der verschiedenen Werkstoffe eine Verbindung der Leitungen mit aufgeschweißten Nippeln aus Polyethylen (PE) erfolgen muß. Dieses Material hat jedoch eine hohe Kriechneigung. Somit versagen konventionell ausgeführte Verbindungen zwischen Rohr und Nippel, z. B. mit Schnellverbindern, da sie innerhalb kurzer Zeit durch das Kriechen des PE undicht werden.

Dies kann durch Verwendung von Elastomerschläuchen zwar vermieden werden. In diesem Fall stellen aber die Gummischläuche selbst die Schwachstelle dar, da sie in hohem Maße durchlässig gegenüber Kohlenwasserstoffen sind. Besser sperrende Fluorelastomere sind extrem teuer. Auch die Verbindung der PE-Nippel mittels Gummischlauch auf ein nicht kriechendes Anschlußelement, z. B. aus glasfaserverstärktem Polyamid (PA), ist aufwendig in der Herstellung und teuer. Außerdem stellt der Schlauch immer noch eine unerwünschte Emissionsquelle dar.

Eine direkte Verbindung z. B. zwischen PE-Nippel und einem auf diesen aufgeschossenen PA-Rohr versagt ebenfalls nach kurzer Zeit, da durch die Vorspannung des Rohres das PE kriecht. Dadurch werden einerseits die Verbindung undicht und andererseits die Verbindungskräfte bei axialer Beanspruchung der Verbindung unzulässig niedrig.

Erhöhte Temperaturen im Bereich der Verbindung sowie Anquellung durch Kraftstoffbestandteile erschweren die Realisierung einer permeationsarmen Verbindung zusätzlich.

Will man den Nippel in kriecharmer Version ausführen, so scheitert dies zum einen daran, daß keine geeigneten verstärkten PE-Typen zur Verfügung stehen, die den mechanischen Anforderungen an die Verbindung gewachsen sind; zum anderen ist die Festigkeit einer Schweißverbindung zwischen einem fasergefüllten und einem ungefüllten Polymer nicht ausreichend hoch.

Aus der DE-PS 42 39 909 ist eine Verbindung bekannt, mit der versucht wird, diese Probleme zu lösen. Dort wird ein rohrartiger Stutzen aus einem zum Kriechen neigenden Material A auf einer Seite mit einem zweiten Material B, welches eine geringe Kriechneigung aufweist, umspritzt. Im Kontaktbereich zwischen den beiden Materialien besitzt dieses rohrartige Gebilde also einen Schichtaufbau AB. Diese Verbindungstechnik hat sich jedoch in praktischen Versuchen nicht bewähren können. Bei Kraftstoffkontakt quillt das Material A nämlich stark auf. Da die Quellung zur einen Seite hin durch das Material B behindert wird, quillt und kriecht das Material in den anderen Richtungen weg, so daß nach einiger Zeit zum einen die Kraftübertragung, zum anderen die Dichtigkeit der Verbindung nicht mehr gewährleistet ist. Verstärkt wird diese Erscheinung noch bei mechanischer Belastung und/oder bei Austrocknung dieses rohrartigen Stutzens. Auch die vorgeschlagene Modifikation eines der beiden Werkstoffe zur Erzielung einer Haftung zwischen beiden verwendeten Formmassen führt eher zu einer Verschlechterung der Dichtheit, da der modifizierte Werkstoff (im Regelfall das PE) noch stärker quillt.

Es sollten daher Möglichkeiten zur Herstellung entsprechender Verbindungen gefunden werden, bei denen die obengenannten Probleme durch eine geeignete geometrische Ausgestaltung des Übergangsbereiches zwischen beiden Materialien vermieden werden. Insbesondere sollte nach einer Möglichkeit gesucht werden, bei der die ansonsten negativ sich auswirkende Quellung eines der beiden Werkstoffe zusätzlich zur Erzielung einer verbesserten Dichtwirkung genutzt wird.

Diese Aufgabe wurde gelöst durch ein Anbindungselement aus zwei unterschiedlich stark quellenden Werkstoffen A und B, bei dem das Teil aus dem stärker quellenden Werkstoff A **(1)** an der Verbindungsstelle mit dem Werkstoff B eine umlaufende Anschlußlippe **(3)** aufweist, die mit dem geringer quellenden Werkstoff B **(2)** vollständig umhüllt ist, so daß ein Formschluß erreicht wird.

Bei dieser Ausführung wird sowohl bei Quellung als auch bei Austrocknung des quellenden Materials durch die auftretenden Axialkräfte eine Dichtwirkung an der Außen- oder an der Innenseite der Anschlußlippe erreicht.

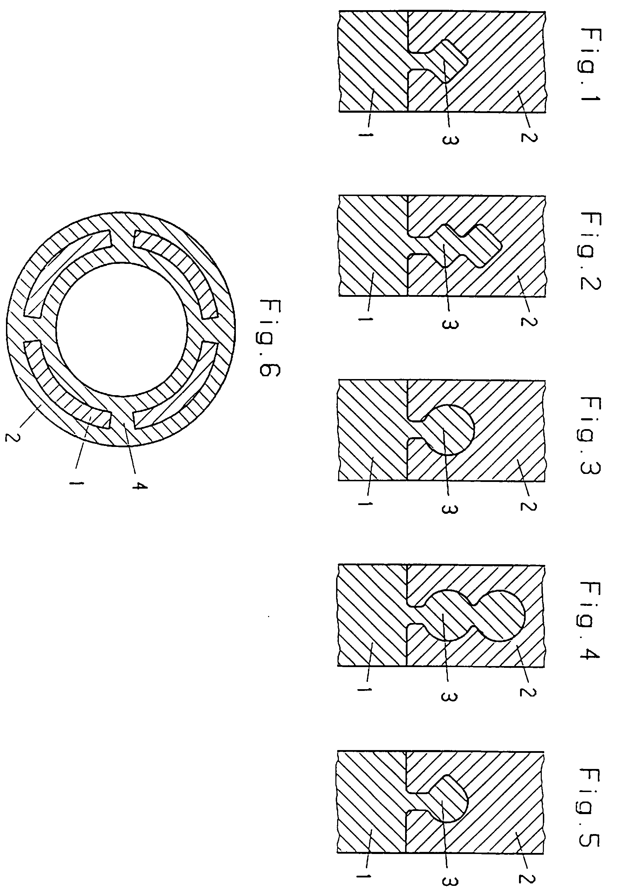

In den Fig. 1 bis 5 sind beispielhaft die Querschnitte möglicher Anschlußlippen **(3)** dargestellt. Die Querschnitte können symmetrisch (Fig. 1 bis 4) oder auch unsymmetrisch (Fig. 5) sein und aus einer Grundgeometrie (Fig. 2, 3 und 5) oder aus zwei oder mehreren Grundgeometrien (Fig. 1 und 4) aufgebaut sein. So ist gemäß Fig. 1 der den Formschluß bewirkende Querschnitt der Anschlußlippe **(3)** als Raute ausgeführt, gemäß Fig. 2 als doppelte Raute, gemäß Fig. 3 als Oval bzw. Kreis, gemäß Fig. 4 als Doppeloval bzw. Doppelkreis und gemäß Fig. 5 als unsymmetrische Kombination aus den Geometrien von Fig. 1 und Fig. 3.

Übergänge in den Zwickelbereichen sowie die Ecken der rautenförmigen Geometrien werden bevorzugt mit einer leichten Verrundung ausgeführt, so daß unzulässig hohe Kerbspannungen vermieden werden.

Die Fig. 6 zeigt, von oben gesehen, einen Schnitt durch eine mögliche Ausführungsform des rohrartigen Anbindungselements. Die mit dem Werkstoff B **(2)** umhüllte Anschlußlippe aus Werkstoff A **(1)** ist in diesem Fall an 4 Stellen durch in Axialrichtung verlaufende Nuten in Segmente unterteilt, wobei sich an den Durchbruchstellen **(4)** Werkstoff B befindet. Hiermit erreicht man eine Verdrehsicherung der beiden Komponenten gegeneinander. Selbstverständlich kann die Anschlußlippe auch an mehr oder an weniger Stellen durchbrochen sein, um diesen Zweck zu erfüllen. Die Tiefe der Nuten kann kleiner als oder gleich der Wanddicke der Lippe sein.

Mit Hilfe einer oder mehrerer in Radialrichtung verlaufenden Bohrungen durch die Wand des stärker quellenden Elements kann ebenfalls ein Formschluß und damit eine Sicherung gegen Verdrehen und/oder Trennen durch axiale Belastung erzielt werden. Es wird bevorzugt, diese Maßnahme mit einer ebenfalls in dieser Richtung wirkenden Geometrie der Anschlußlippe zu kombinieren, die in den Fig. 1 bis 5 beispielhaft dargestellt ist. Die Tiefe der Bohrungen kann kleiner als oder gleich der Wanddicke der Lippe sein.

Die beiden Werkstoffe A und B können miteinander inkompatibel, d. h. molekular unverträglich sein. Hiermit wird der Sachverhalt ausgedrückt, daß an der Grenzfläche zwischen beiden Werkstoffen keine Phasenhaftung erzielt wird. Die Sicherung gegen Trennen durch axiale Belastung wird hier alleine durch den Formschluß erzielt. Eine bessere Sicherung gegen Trennen sowie eine zuverlässige Dichtwirkung kann aber erzielt werden, wem die beiden Werkstoffe A und B miteinander kompatibel sind. Dies wird erreicht, wenn die beiden Werkstoffe miteinander molekular verträglich sind oder wenn sie miteinander durch chemische Reaktion an der Phasengrenzfläche verbunden werden. In kraftstofführenden Systemen ist Werkstoff A beispielsweise PE, insbesondere HDPE und Werkstoff B beispielsweise Polyamid 12 oder ein anderes Polyamid wie PA 11, PA 6, PA 66, PA 612 oder auch Polyketon oder Polyacetal. Die Kompatibilisierung der beiden Polymeren kann im ebengenannten Beispiel dadurch bewerkstelligt werden, daß ein HDPE verwendet wird, das gemäß dem Stand der Technik beispielsweise mit Maleinsäureanhydrid funktionalisiert wurde, so daß beim Umspritzen eine chemische Anbindung an der Grenzfläche zwischen PE und PA erhalten wird. Genauso kann generell ein aus dem Stand der Technik bekannter Haftvermittler eingesetzt werden.

Die Komponente aus dem Werkstoff B kann aus einer faserverstärkten Formmasse bestehen. Beispielsweise können Glas-, Kohlenstoff-, Aramid- oder Metallfasern als Verstärkungsmittel verwendet werden. In einer speziellen Ausführungsform besteht der Werkstoff B aus einem Metall. Diese Komponente kann beispielsweise mittels Gewindestück oder Flansch an die zugehörigen Aggregate angeschraubt werden

Das erfindungsgemäße Anbindungselement kann auf besonders einfache Weise durch Zweikomponentenspritzgießen hergestellt werden. Dabei kann entweder die Komponente B als Schmelze auf ein Formteil aus der Komponente A gespritzt werden, oder es kann umgekehrt die Komponente A als Schmelze auf ein Formteil aus der Komponente B gespritzt werden. Eine weitere Möglichkeit der Herstellung besteht darin, daß entweder die Komponente B vorgespritzt und die Komponente A in die Schmelze der Komponente B nachgespritzt wird, oder es wird umgekehrt die Komponente A vorgespritzt und die Komponente B in die Schmelze der Komponente A nachgespritzt. Alle diese Verfahren des Zweikomponentenspritzgießens sind Stand der Technik und dem Fachmann wohlbekannt, so daß sich eine genauere Beschreibung erübrigt.

Das erfindungsgemäße Anbindungselement kann in all den Fällen verwendet werden, in denen die Anbindungstechnik für die Anbindung an ein Aggregat den Werkstoff A erforderlich macht, während die Anbindung an die Rohrleitung den Werkstoff B erfordert. Beispielsweise kann das Anbindungselement als Anschlußelement zwischen einem Behälter, insbesondere einem Kunststoffkraftstoffbehälter, und einer Rohrleitung verwendet werden. Hierzu wird das Anbindungselement auf eine Öffnung des Kunststoffkraftstoffbehälters aufgeschweißt, beispielsweise durch Rotationsschweißen.

Zur anderen Seite, nämlich zur Rohrleitung hin, kann das erfindungsgemäße Anbindungselement mit allen Methoden des Standes der Technik verbunden werden. Beispielweise kann die Anbindung der Rohrleitung durch Aufschießen der Leitung auf ein Dornprofil realisiert werden. Andere Möglichkeiten sind die Anbindung mit einem Schnellverbinder, mittels Verschweißung oder durch Verschraubung. Ebenfalls denkbar sind Verbindungen für die Anbindung von Ventilen, Filtern oder anderen Komponenten in Systemen, die jedwede Art von Flüssigkeiten oder Dämpfen führen.

Somit kann mit dem erfindungsgemäßen Anbindungselement eine dauerhaft feste Verbindung zwischen Bauteil und Rohr bei gleichzeitiger Reduzierung umweltschädlicher Emissionen erzielt werden.

## Patentansprüche

1. Anbindungselement aus zwei unterschiedlich stark quellenden Werkstoffen A und B, bei dem das Teil aus dem stärker quellenden Werkstoff A an der Verbindungsstelle mit dem Werkstoff B eine umlaufende Anschlußlippe aufweist, die mit dem geringer quellenden Werkstoff B vollständig umhüllt ist, so daß ein Formschluß erreicht wird.

2. Anbindungselement gemäß Anspruch 1, wobei der Werkstoff A ein Thermoplast oder ein Elastomer und der Werkstoff B ein Thermoplast oder ein Metall ist.

3. Anbindungselement gemäß einem der vorhergehenden Ansprüche, wobei die Anschlußlippe durch in Axialrichtung verlaufende Nuten in Segmente unterteilt ist.

4. Anbindungselement gemäß einem der vorhergehenden Ansprüche, wobei die Anschlußlippe mit einer oder mehreren in Radialrichtung verlaufenden Bohrungen versehen ist.

5. Anbindungselement gemäß einem der vorhergehenden Ansprüche, wobei der stärker quellende Werkstoff ein Polyethylen ist.

6. Anbindungselement gemäß einem der vorhergehenden Ansprüche, wobei die beiden Werkstoffe A und B miteinander kompatibel sind.

7. Herstellung eines Anbindungselements gemäß einem der vorhergehenden Ansprüche mittels Zweikomponentenspritzgießens oder mittels eines zweistufigen Spritzgießprozesses.

8. Verwendung eines Anbindungselements gemäß einem der Ansprüche 1 bis 6 zur Verbindung eines Aggregates mit einer Rohrleitung.

9. Verwendung gemäß Anspruch 8, wobei das Aggregat ein Behälter, ein Ventil oder ein Filter ist.

10. Verwendung gemäß Anspruch 8, wobei das Aggregat ein Kunststoffkraftstoffbehälter ist.
